# EUROPEAN PATENT APPLICATION

(11) **EP 4 227 639 A1**
(43) Date of publication of application: **16.08.2023**
(21) Application number: 22155920.6
(22) Date of filing: 09.02.2022
(51) Int. Cl.: G01B 17/02, G01S 7/521

(54) **AN ULTRASOUND INSPECTION PROBE FOR A MACHINE TOOL**

(71) Applicant: Renishaw plc, Wotton-Under-Edge Gloucestershire GL12 8JR (GB)
(72) Inventor: The designation of the inventor has not yet been filed
(74) Representative: Dunn, Paul Edward

(57) **Abstract**

An ultrasound inspection probe (1) for a machine tool is described that includes a probe body and an elongate member (40;98) that extends from the probe body (60; 96) and has a datum surface (44;106) for contacting an object (34;50) to be inspected. The probe also includes an ultrasound transducer (28; 112) and an ultrasound coupling assembly (20; 110) for acoustically coupling the ultrasound transducer (28; 112) to the object (34) to be inspected. The ultrasound coupling assembly (20;110) comprises a carrier shell (24;115) containing an ultrasound coupling element (22;114) having a transducer-contacting face (26;118) coupled to the ultrasound transducer and an object-contacting face (32; 116) for acoustically coupling to the object (34) to be inspected. A bearing mechanism (90,92; 113,130) movably attaches the ultrasound transducer (28;112) and the ultrasound coupling assembly (20; 110) to the elongate member (40;98) allowing movement between an extended position in which the object-contacting face (32;116) of the ultrasound coupling element (22;114) extends beyond the datum surface (44;106) and a measurement position in which the object-contacting face (32;116) of the ultrasound coupling element (22;114) is substantially flush with the datum surface (44;106). The bearing mechanism (90,92; 113,120) is configured to guide the ultrasound transducer along a linear axis of the elongate member such that the ultrasound transducer maintains a substantially invariant orientation relative to the surface normal of the datum surface (44;106).

## Description

The present invention relates to ultrasound measurement devices, and in particular to an improved ultrasound inspection probe for use on a machine tool.

Ultrasound measurement devices for measuring industrial objects are known. Such devices range from simple handheld units that are manually pressed into contact with the object being inspected by a user to dedicated measurement systems that take automated measurements.

US2009/0178482 describes a coordinate measuring machine (CMM) that is arranged to carry an ultrasound test probe for measuring the thickness of objects. In one embodiment, the ultrasound test probe is mounted via gimbals that allow the ultrasound test probe to align itself to the surface of the object being inspected. This self-alignment to the surface of the object allows the test probe to measure object wall thickness along a line perpendicular to the surface thereby maximising the ultrasound return signal. Acoustic coupling between the test probe and object also requires the application of a couplant gel, which may be applied manually or in an automated manner from a reservoir.

An alternative ultrasound measurement device for use with a CMM, particularly a robot arm, is described in EP2487455. A spring-loaded ultrasound transducer is carried by the robot arm and pressed into engagement with an object to be measured. Deflection of the transducer element is measured by a force or displacement sensor to provide a surface position measurement, whilst the ultrasound transducer provides a simultaneous measurement of object wall thickness.

WO2008/012535 describes an ultrasound probe having a wireless transmitter for transmitting data collected by the probe. The wireless ultrasound probe can thus not only be used on CMMs, but also on computer numerically controlled (CNC) machining centres where the absence of a wired connection means it can be automatically exchanged for tools or other measurement sensors. WO2021/038106 describes a further wireless ultrasonic measurement probe for use with a CNC machine tool. The device includes a tubular sleeve having an elastic carrier element protruding slightly from its distal end. The elastic carrier element is formed from an elastomer, such as Aqualene, which removes the need to apply an acoustic coupling liquid to the object being measured. The elastic carrier element is deformable such that when the device is pressed into engagement with a surface the distal end of the elastic carrier element deforms and displaces until it becomes flush with the end of the tubular sleeve. In the primary embodiment, an annular gap is provided between the elastic carrier element and the inside surface of the tubular sleeve at the distal end of the tubular sleeve. This annular gap accommodates the expansion of the elastic carrier element that occurs when it is pressed into engagement with a surface as shown in figures 3 and 4 of WO2021/038106.

The present inventors have recognised that the above-described devices have certain disadvantages when used in machine tool environments. For example, the elastomer used as the carrier element in WO2021/038106 is likely to absorb the coolant typically used in CNC machine tools and thereby swell during use. The provision of the annular gap is also likely to collect debris or coolant that can damage the elastomer carrier element. Furthermore, the surface contact force is not accurately controlled, and acoustic performance will be degraded by the unconstrained outer surface of the elastomer. These effects all reduce device performance.

According to a first aspect of the present invention, there is provided an ultrasound inspection probe for a machine tool, comprising:
a probe body,
an elongate member extending from the probe body, the elongate member comprising a datum surface for contacting an object to be inspected,
an ultrasound transducer,
an ultrasound coupling assembly for acoustically coupling the ultrasound transducer to the object to be inspected, the ultrasound coupling assembly comprising a carrier shell containing an ultrasound coupling element, the ultrasound coupling element comprising a transducer-contacting face coupled to the ultrasound transducer and an object-contacting face for acoustically coupling to the object to be inspected, and
a bearing mechanism for movably attaching the ultrasound transducer and the ultrasound coupling assembly to the elongate member, the bearing mechanism allowing the ultrasound transducer and the ultrasound coupling assembly to move between an extended position in which the object-contacting face of the ultrasound coupling element extends beyond the datum surface of the elongate member and a measurement position in which the object-contacting face of the ultrasound coupling element is substantially flush with the datum surface of the elongate member,
wherein the bearing mechanism is configured to guide the ultrasound transducer along a linear axis of the elongate member such that the ultrasound transducer maintains a substantially invariant orientation relative to the surface normal of the datum surface.

An ultrasound inspection probe, or an ultrasound probe for short, is thus provided that is configured for use in a machine tool environment. The ultrasound probe comprises an elongate member that protrudes from a probe body. For example, the proximal end of an elongate member may be attached to the probe body. The elongate member may be permanently attached to, or integrated with, the probe body or it may form part of a stylus that is removably attachable to the probe body. The elongate member comprises a datum surface (i.e., a surface that acts as a reference or datum) that is configured to contact the object to be measured. In one embodiment, the datum surface may be provided at the distal end of an elongate tubular member. In such an example, the datum surface may comprise an annular face or ring.

An ultrasound transducer and an ultrasound coupling assembly are also provided for generating and coupling ultrasound into the object to be inspected. The ultrasound coupling assembly, which may provide a so-called ultrasound delay line, includes a carrier shell and an ultrasound coupling element. The ultrasound coupling element, or coupling element for short, is preferably formed from a material, such as a silicone rubber, that is elastically deformable and a good conductor of ultrasound. As explained below, it is preferred that the ultrasound coupling element comprises a so-called dry or soft coupling material that allows ultrasonic coupling with an object without the need for an ultrasound couplant gel or the like. The ultrasound coupling element is at least partially contained within the carrier shell and an object-contacting face of the ultrasound coupling element extends from the carrier shell.

The ultrasound transducer is acoustically coupled to the ultrasound coupling assembly. In particular, the ultrasound transducer is acoustically coupled to the ultrasound coupling assembly by being in physical contact with the transducer-contacting face of the ultrasound coupling element. The physical contact may be direct or it may be indirect (e.g., via an intermediate component, such as an adhesive). The ultrasound transducer may emit ultrasound. The ultrasound transducer may detect ultrasound. The ultrasound transducer may both emit and detect ultrasound. Any suitable ultrasound mode (e.g., transverse or longitudinal) may be generated and/or detected by the ultrasound transducer. For example, the ultrasound transducer may generate ultrasound and detect returned ultrasound to implement pulse-echo ultrasound detection. The ultrasound generated by the ultrasound transducer may thus be coupled into the object to be inspected via the ultrasound coupling assembly. The ultrasound transducer and the ultrasound coupling assembly may together enable thickness or flaw measurements etc of an object to be taken.

A bearing mechanism is also provided to movably attach the ultrasound coupling assembly and the ultrasound transducer to the elongate member. In one example, the ultrasound coupling assembly and the ultrasound transducer are slidably mounted within an elongate tubular member. The ultrasound coupling assembly can move relative to the elongate member between a measurement (retracted) position and an extended position. In the extended (i.e., non-measurement) position the object-contacting face of the ultrasound coupling element extends beyond the datum surface of the elongate member. The object-contacting face may thus be the distal-most portion of the ultrasound probe when in the extended position. In the measurement position, the object-contacting face is positioned to lie substantially flush with the datum surface of the elongate member. In the measurement position, the object-contacting face is thus retracted compared to the extended position. It would, of course, be possible for other positions of the ultrasound coupling assembly to be adopted. For example, further retraction beyond the measurement position and/or further extension past the extended position may be possible.

The bearing mechanism is configured to guide the ultrasound transducer along a linear axis of the elongate member. In other words, the bearing mechanism controls motion of the ultrasound transducer so that it is constrained to only move back and forth along a linear axis of the elongate member to which it is movably attached. The constraint provided by the bearing mechanism thus enables translational motion (i.e., motion in a straight line) of the ultrasound transducer along the linear axis of the elongate member. Furthermore, the bearing mechanism is configured to maintain the orientation of the ultrasound transducer relative to the normal to the datum surface when it is translated along the linear axis. In other words, rotation or tilting of the transducer is constrained as necessary to ensure the ultrasound transducer maintains its substantially invariant orientation relative to the normal to the datum surface. Taking the linear axis as the direction of motion, this can be considered as preventing pitch and yaw of the ultrasound transducer. Roll of the ultrasound transducer does not alter the orientation of the ultrasound transducer relative to the normal to the datum surface. It is, however, also possible (although not essential) to fully or at least partially constrain roll of the ultrasound transducer.

In use, the datum surface is brought into engagement with the surface of the object to be inspected. This engagement physically (mechanically) aligns the datum surface with the surface of the object. For example, a plane of the datum surface may then lie parallel to the plane of the surface that it has been placed into contact with. The orientation of the ultrasound transducer does not vary relative to the normal of the datum surface when the ultrasound transducer translates back and forth along the linear axis of the elongate member. This means that the orientation of the ultrasound transducer always remains fixed relative to the surface normal of the contacted object. Fixing the orientation of the ultrasound transducer relative to the surface normal of the object thus controls the direction along which ultrasound generated by the ultrasound transducer is coupled into and/or received from the object. In particular, changes in the location of the ultrasound transducer along the linear axis (e.g., which may occur due to swelling of the ultrasound coupling element etc) do not alter the orientation of the ultrasound transducer relative to the surface normal of the object. This allows more reliable and consistent ultrasound measurements to be collected using the ultrasound probe.

As will be explained below, the ultrasound probe of the present invention has a number of advantages over the prior art devices mentioned in the introduction above.

US2009/0178482 describes an ultrasound transducer in which the angular orientation of the ultrasound transducer can vary relative to the distal end of the sleeve that contacts the object being measured. Unlike the present invention, the ultrasound transducer in the device of US2009/0178482 must include a rigid coupling element, such as Rexolite (Registered trade mark), to ensure perpendicular alignment with the surface of the object. This makes use of a couplant gel necessary to establish acoustic contact with the object for the device of US2009/0178482, which simply isn't practical in a machine tool environment.

Unlike the arrangement of EP2487455, the ultrasound probe of the present invention has a measurement position in which the object-contacting face is positioned to lie substantially flush with the distal end of the elongate member. The arrangement of the present invention thus better defines the alignment of the ultrasound transducer relative to the surface of the object and also provides control and consistency over the force with which the ultrasound coupling element is engaged with the object, thereby improvement measurement accuracy.

Furthermore, unlike the ultrasound probe of WO2021/038106, the probe of the present invention allows a well-controlled compressive force to be applied to the ultrasound coupling element, even if the material used for the ultrasound coupling element expands or swells (e.g., due to exposure to machine tool coolant or lubricant). The avoidance of the annular expansion gap described in certain embodiments in WO2021/038106 also prevents the collection of debris that could otherwise damage the coupling element.

As explained above, the elongate member includes a so-called datum surface. A datum surface is a surface that acts as a physical reference or datum. As explained above, the normal to the datum surface has a fixed (invariant) orientation relative to the linear axis along which the ultrasound transducer can translate. The datum surface may lie in a plane with a surface normal direction being perpendicular to the plane. In one example, the elongate member may be tubular and the distal end of the elongate (tubular) member may provide the datum surface. For example, if the elongate member is tubular and has a circular cross-section, the distal annular end-face of the elongate tubular member may provide a planar datum surface. The datum surface may comprise a single, continuous datum surface (e.g., an annular ring or a flat plate) or it may be formed from a plurality of (non-continuous) spaced-apart surface sections (e.g., a plurality of partial ring segments). Preferably, the linear axis of ultrasound transducer motion is substantially parallel to the surface normal of the datum surface. In other words, the linear axis may be substantially perpendicular to a plane containing the datum surface. In this manner, the linear axis along which the ultrasound transducer translates will also be substantially perpendicular to the surface of an object that is placed into contact with the datum surface. Although providing such perpendicular alignment is preferred, other (e.g., known) orientations of the plane containing the datum surface and the linear axis may be provided.

Advantageously, the ultrasound transducer emits and/or receives ultrasound along at least a first acoustic axis. The ultrasound transducer may also emit and/or receive ultrasound along one or more further acoustic axes. In the case of an emitted signal, the acoustic axis is the direction of maximum emitted signal strength. In the case of a received signal, the acoustic axis is the direction of maximum sensitivity to the incoming ultrasound signal. There may also be different acoustic axes for different ultrasound modes. For example, different acoustic axes may be present for longitudinal and transverse modes. Preferably, the first acoustic axis is the acoustic axis for the ultrasound mode that the device is configured to use for measurement.

The position and/or orientation of the first acoustic axis may be known and/or fixed relative to the linear axis along which the ultrasound transducer can move back and forth. In this manner, the normal to the datum surface of the elongate member also has a fixed orientation relative to the first acoustic axis. Advantageously, the first acoustic axis is configured to be substantially parallel to the linear axis (i.e., the axis along which the ultrasound transducer is guided). The linear axis and the first acoustic axis may be laterally offset. Advantageously, the linear axis and the first acoustic axis are substantially coincident. If the linear axis is arranged to be substantially perpendicular to a plane containing the datum surface, then the first acoustic axis can also be configured to be substantially perpendicular to the plane containing the datum surface. Consequently, the first acoustic axis of the ultrasound inspection probe can be configured to be substantially perpendicular to the datum surface. In this manner, it can be ensured that ultrasound is coupled into the surface of the object from a direction that is perpendicular to the surface of the object (i.e., because the acoustic axis will also be substantially perpendicular to the surface of the contacted object). Directing sound into an object along its surface normal direction will typically maximise the return signal and can also ensure any measurements, for example of object thickness, correspond to a known position within the object.

Advantageously, the first acoustic axis is aligned to the normal of the datum surface to within 1°. More preferably, the first acoustic axis is aligned to the normal of the datum surface to within 0.5°. More preferably, the first acoustic axis is aligned to the normal of the datum surface to within 0.2°. More preferably, the first acoustic axis is aligned to the normal of the datum surface to within 0.1°. In one embodiment, the first acoustic axis may be aligned to the normal of the datum surface with a tolerance of around 0.08° or less. As explained above, in one embodiment these tolerances will thus also define the tolerance to which the first acoustic axis is aligned relative to the surface normal of an object being inspected.

Advantageously, the ultrasound probe also comprises a biassing mechanism for urging the ultrasound coupling assembly towards the extended position. The biassing mechanism may comprise a compression spring or similar. The provision of such a biassing mechanism results in the extended position being adopted in the absence of an applied external force, such as before bringing the ultrasound probe into contact with an object to be measured. The act of engaging the datum surface of the elongate tubular member with the object to be inspected thus causes an external force to be applied to the object-contacting face of the ultrasound coupling element by the object. This external force moves the ultrasound coupling assembly relative to the elongate member into the measurement position, against the bias that is provided by the biasing mechanism. The biassing mechanism also acts to urge the object-contacting face into physical engagement with the object to be inspected when in the measurement position. This bias ensures good acoustic coupling between the ultrasound coupling element and the object. The strength of the applied bias can also be selected to ensure such acoustic coupling is optimised and consistently applied during a series of measurements. Importantly, the compressive force applied to the ultrasound coupling element can be set by the biasing mechanism and does not depend on controlling the position of the ultrasound probe relative to the object being inspected. Furthermore, the biasing mechanism can be configured so that the compressive force is largely independent of the size, and in particular, the length, of the coupling element, e.g., by using a spring with a low spring rate and a high preload.

The biasing mechanism may directly or indirectly engage the ultrasound coupling assembly to apply the bias. Advantageously, the biasing mechanism applies the bias to the ultrasound coupling assembly via the ultrasound transducer. As explained above, the object-contacting face of the ultrasound coupling element is configured to contact the object that is being measured whilst the transducer-contacting face of the ultrasound coupling element contacts the ultrasound transducer. The biasing mechanism may thus urge the ultrasound transducer into contact with the transducer-contacting face of the ultrasound coupling element thereby urging the object-contacting face of the ultrasound coupling element into engagement with the object. In other words, the biassing force applied by the biasing mechanism to the ultrasound coupling element is passed through the ultrasound transducer. The same magnitude of biasing force will then urge the transducer into contact with the transducer-contacting face and also urge the object-contacting face into contact with the object.

As explained above, in the absence of contact with an object to be inspected the biasing mechanism will urge the ultrasound coupling assembly into the extended position. When the ultrasound probe is brought into contact with an object, the biasing force is overcome and the ultrasound coupling assembly retracts. However, the datum surface of the elongate member limits the retraction (i.e., so the measurement position is adapted) and the biasing mechanism will then alone control the magnitude of the force with which the ultrasound transducer is pressed into engagement with the ultrasound coupling element of the ultrasound coupling assembly. Furthermore, by passing the biasing force through the transducer the biasing mechanism also controls the overall magnitude of the compressive force applied to the ultrasound coupling element. This arrangement makes measurements more repeatable because they do not depend on accurately positioning the ultrasound probe relative to the object to ensure that a certain force is applied to the object being inspected and/or that the coupling element is subjected to a certain compressive force. In addition, the force applied by the biasing mechanism can be configured to be minimally dependent on the thickness of the coupling element. For example, the biassing mechanism could comprise a spring with a low spring rate and a high pre-load. Such an arrangement allows the coupling element to expand in oil by a significant amount without affecting the applied compressive force.

The bearing mechanism guides motion of the ultrasound transducer and the ultrasound coupling assembly. The bearing mechanism may include a single bearing arrangement for guiding a unitary module that comprises both the ultrasound transducer and the ultrasound coupling element. The entire unitary module may then maintain a substantially invariant orientation relative to the surface normal of the datum surface as it is guided back and forth along the linear axis of the elongate member. Alternatively, the bearing mechanism may guide motion of the ultrasound transducer and the ultrasound coupling assembly may be attached to the transducer and thereby also (indirectly) guided by the bearing mechanism. Conversely, the ultrasound transducer may be indirectly guided if attached to an ultrasound coupling assembly that is directly guided by the bearing mechanism.

Advantageously, the ultrasound transducer and the ultrasound coupling assembly are attached to the elongate member by separate portions of the bearing mechanism. This allows relative (linear) movement of the ultrasound transducer and the ultrasound coupling assembly and is advantageous because it allows the compressive force applied to the ultrasound coupling element to be controlled by a biassing force applied via the ultrasound transducer.

The bearing mechanism may thus comprise a first bearing portion for guiding the motion of the ultrasound transducer relative to the elongate member. This first bearing portion guides the ultrasound transducer along the linear axis of the elongate member and ensures the ultrasound transducer maintains a substantially invariant orientation relative to the normal of the datum surface. The bearing mechanism may further comprise a second bearing portion for guiding motion of the ultrasound coupling assembly relative to the elongate member. The second bearing portion may guide the ultrasound coupling assembly along the linear axis of the elongate member to ensure the ultrasound coupling assembly maintains a substantially invariant orientation relative to the normal of the datum surface. The tolerance of the guidance provided by the second bearing portion may, however, be lower than that provided by the first bearing portion. In particular, maintaining the angular orientation of the ultrasound coupling assembly when it is guided back and forth along the linear axis is less critical. Any slight deviations of the ultrasound coupling assembly away from a linear path and/or any angular changes (pitch, yaw or roll) in the orientation of the ultrasound coupling assembly relative to the normal to the datum surface are unlikely to significantly affect the acoustic path between the transducer and the object being inspected. In other words, the "play" of the second bearing portion can be substantially higher than the play of the first bearing portion without affecting the overall measurement performance.

The bearing mechanism of the ultrasound probe may comprise any suitable bearing arrangement or arrangements that provide the required control over the motion of the ultrasound transducer and the ultrasound coupling assembly. In one embodiment, sliding bearings are provided that comprise one or more bearing surfaces formed on each of the ultrasound coupling assembly, the ultrasound transducer and the inner surface of the elongate member. Alternatively, a ball-bearing slide may be provided.

Advantageously, the first bearing portion is provided by a moulded outer surface of the ultrasound transducer that is in sliding contact with an inner surface of the elongate member. For example, the outer surface of a layer of adhesive (e.g., epoxy) that surrounds (e.g., encapsulates) the ultrasound transducer may provide such a moulded outer surface. Advantageously, the moulded outer surface of the ultrasound transducer conforms to (i.e., matches the contours of) the inner surface of the elongate member. Preferably this is achieved by forming the moulded outer surface within the elongate member (e.g., by curing an adhesive when the ultrasound transducer is located within the elongate member). In this manner, the inner surface of the elongate member acts as the mould for the moulded outer surface. The moulded outer surface of the ultrasound transducer thus accurately replicates the form of the inner surface of the elongate member thereby providing a high accuracy sliding bearing.

The second bearing portion may be provided by protrusions (e.g., O-rings) provided on the outer surface of the carrier shell that are in sliding contact with an inner surface of the elongate member. Although such a protrusion-based arrangement typically has more play than the moulded arrangement mentioned above, it has been found to provide adequate linear guidance of the ultrasound coupling assembly.

The bearing mechanism (e.g., the first bearing portion) may be configured so that the angular orientation of the ultrasound transducer relative to the normal of the datum surface can be adjusted. It should be noted that once adjusted the angular orientation of the ultrasound transducer should remain invariant relative to the normal of the datum surface as it is translated back and forth along the linear axis. As explained above, ultrasound energy from the ultrasound transducer can be directed along a first acoustic axis that has a certain orientation relative to the linear axis along which the ultrasound transducer is guided. The apparatus may be arranged to allow the orientation of the first acoustic axis to be adjusted without adjusting the angular orientation of the ultrasound transducer as defined by the first bearing portion. For example, the ultrasound transducer may include an internal adjustment mechanism for steering the direction of the first acoustic axis. This internal adjustment mechanism may be mechanical or electronic and allows the angle of the first acoustic axis to be adjusted relative to the normal of the datum surface. In this manner, the angle at which ultrasound is directed at the surface of an object to be inspected can be adjusted.

Any adjustment of the orientation of the ultrasound transducer or the first acoustic axis relative to the normal of the datum surface may only be possible during initial manufacture or configuration of the ultrasound probe. In other words, the end user may not be able to make such adjustments. Alternatively, the orientation of the ultrasound transducer or the first acoustic axis relative to the normal of the datum surface may be adjusted as and when required. For example, such adjustments may be made during a periodic calibration procedure to ensure ultrasound is directed in a defined direction (e.g., perpendicular to) the surface of the object being inspected.

The elongate member that protrudes from the probe body may have any shape. Advantageously, the elongate member comprises an elongate tubular member. The elongate member may thus be provided in the form of a tube that preferably includes a hollow inner cavity. The ultrasound transducer and the ultrasound coupling assembly may then be movably mounted within the elongate tubular member. In other words, the bearing mechanism may mount the ultrasound transducer and ultrasound coupling assembly for movement within the hollow inner cavity of the tube. The linear axis along which the ultrasound transducer translates may correspond to the longitudinal axis of the elongate tubular member.

The elongate tubular member may have any suitable cross-sectional shape or profile. For example, it may have a square, rectangular, or oval cross-section. Advantageously, the elongate tubular member has a substantially circular cross-section. Preferably, at least a portion of the elongate tubular member is hollow. The ultrasound transducer and/or the ultrasound coupling assembly may be at least partially housed within the hollow portion of the elongate tubular member. The cross-sectional shape of the ultrasound coupling assembly and/or the ultrasound transducer is preferably the same as the cross-sectional shape of the hollow portion of the elongate tubular member. For example, the elongate tubular member, the ultrasound coupling assembly and/or the ultrasound transducer may each have a substantially circular cross-sectional profile. As explained above, this allows a sliding bearing arrangement to be provided to enable the linear translation of the ultrasound coupling assembly relative to the elongate tubular member.

The elongate tubular member may comprise a single part or tube (i.e., it may be provided as a unitary component). Alternatively, the elongate tubular member may be formed from a plurality of sections. These sections may be permanently attached (e.g., bonded) to one another. Alternatively, such sections may be releasably attached to one another to allow sections to be removed or replaced as necessary. The ability to disassembly the elongate tubular member may be advantageous for repair purposes.

The proximal end of the elongate member may be permanently attached to or otherwise integrated with the probe body (i.e., so the elongate member is not detachable during normal use by a user). Alternatively, the proximal end of the elongate member may be releasably attachable to the probe body. For example, a screw thread attachment could be used to attach the proximal end of the elongate member to the probe body. In such a detachable configuration, the elongate member (e.g., an elongate tubular member) and the various components attached to and/or contained within the elongate member (e.g., the ultrasound coupling assembly, ultrasound transducer etc.) may together provide an ultrasound stylus assembly that can be removably attached to the probe body.

Advantageously, the carrier shell of the ultrasound coupling assembly comprises a substantially rigid material. Preferably the substantially rigid material at least partially constrains the ultrasound coupling element. For example, the carrier shell may be sufficiently rigid to prevent or inhibit the material forming the ultrasound coupling element from expanding in a certain direction. There may thus be direct contact (i.e., no gap) between the carrier shell and the ultrasound coupling element. The carrier shell may comprise an ultrasound absorbing material. The carrier shell may be formed from a plastic material, such as PTFE. The carrier shell may comprise a metal, such as Aluminium. Aluminium is advantageous because it is easy to process and does not deform when a compressive force is applied to the ultrasound coupling element it contains. The carrier shell may comprise internal serrations or ridges (e.g., to suppress ultrasound reflections). The carrier shell and ultrasound coupling element may be formed as a unitary component. For example, a carrier shell may be formed by hardening an outer region of material surrounding the ultrasound coupling element. Alternatively, the ultrasound coupling element may be inserted, cast and/or bonded into a separate (discrete) carrier shell.

The ultrasound coupling assembly may have any suitable shape. As explained above, the object-contacting and transducer-contacting faces may be provided at opposite ends (e.g., at the front and rear) of the ultrasound coupling element. The transducer-contacting face may be substantially parallel to object-contacting face. The object-contacting face and/or the transducer-contacting face may be dome-shaped. All of the ultrasound coupling element may be located between the transducer-contacting and object-contacting faces. The faces (ends) of the ultrasound coupling element may also protrude slightly from the carrier shell provided around the side or sides of the ultrasound coupling element. The constraint provided by the carrier shell preferably prevents radial expansion of the ultrasound coupling element but allows longitudinal movement of the ultrasound coupling element. In other words, the compressive force applied to the object-contacting and transducer-contacting faces may distort the ultrasound coupling element without there being any radial expansion of that coupling element. For example, dome-shaped faces may be flattened when a compressive force is applied. This arrangement thus allows a high compressive force, e.g., 10N or more, to be applied to the object-contacting and transducer-contacting faces without any radial expansion of the ultrasound coupling element occurring. In addition, the object contacting face can conform to the shape of the object's surface thereby improving acoustic coupling without affecting the acoustic alignment. This high contact force can thus provide an ultrasound signal with lower signal attenuation.

Preferably, the carrier shell is substantially tubular. Conveniently, the carrier shell is substantially tubular and has a circular cross-section. In such an example, the ultrasound coupling element may be radially constrained by the tubular carrier shell. A cylindrical ultrasound coupling assembly may thus be provided. The ultrasound coupling element may not inhibit (i.e., it may be configured to permit) axial (longitudinal) expansion of the ultrasound coupling element. An acoustic axis of the ultrasound transducer may approximately coincide with the longitudinal axis of the carrier shell.

The ultrasound coupling element may be formed from any material through which ultrasound can be transmitted. The ultrasound coupling element preferably comprises an elastic ultrasound coupling element. The ultrasound coupling element preferably comprises an elastically deformable ultrasound coupling element. The ultrasound coupling element is preferably sufficiently elastic (soft) to deform to the surface of the object. For example, the ultrasound coupling element may comprise a material which will form a direct acoustic coupling with a flat (Ra < 0.8µm) piece of metal, such as Aluminium, when subjected to an average pressure not exceeding 3MPa. The material may also be sufficiently elastic to deform reversibly until its faces are misaligned by up to 1°. Preferably, the hardness of the ultrasound coupling element is less than 100 shore A. More preferably, the hardness of the ultrasound coupling element is less than 90 shore A. More preferably, the hardness of the ultrasound coupling element is less than 50 shore A. For example, the hardness of the ultrasound coupling element may be around 30 shore A. Advantageously, the material is highly deformable with an elongation at break exceeding 50%. This should be contrasted to a hard ultrasonic coupling material, such as Rexolite (registered trade mark), which has a shore A hardness of 100 (i.e. off the shore A scale) and an elongation at break of 2-3%. Advantageously, the acoustic attenuation of the material forming the ultrasound coupling element is less than 20dB/mm at 5MHz. More preferably, the acoustic attenuation of the material forming the ultrasound coupling element is less than 10 dB/mm at 5MHz. More preferably, the acoustic attenuation of the material forming the ultrasound coupling element is less than 5dB/mm at 5MHz. More preferably, the acoustic attenuation of the material forming the ultrasound coupling element is less than 2.5dB/mm at 5MHz. More preferably, the acoustic attenuation of the material forming the ultrasound coupling element is less than 1dB/mm at 5MHz.

Advantageously, the ultrasound coupling element comprises a dry elastic ultrasound coupling element. A dry elastic ultrasound coupling element may also be termed a soft elastic coupling element (as opposed to hard coupling elements). A dry ultrasound coupling element can, by definition, acoustically couple to an object without requiring use of a couplant liquid or gel. This is unlike so-called wet (or hard) coupling elements, such as those formed of Rexolite, that do require the application of such a couplant liquid or gel to provide acceptable acoustic coupling with an object.

The ultrasound coupling element may be formed from any suitable material. The ultrasound coupling element may comprise a heat cure Silicone rubber. A heat cure silicone, also known as high-consistency rubber (HCR), is advantageous because it is relatively cheap to mould. Such an HCR can also be moulded and bonded to a carrier shell in one operation, removing the need for gluing the rubber to a housing or shell. An example of such a HCR is the Aquasilox material sold by innovation polymers, Kitchener, Ontario, Canada. Other Silicones could be used, such as Liquid Silicone Rubber (LSR) or the like. For example, the LSR material "Ultracouple dry couplant" produced by Sonemat Ltd, Warwick UK.

Advantageously, the elongate member is mounted to the probe body via a movable joint. Such a movable joint allows the elongate member to reorient when the datum surface at its distal end is brought into contact with the surface of the object to be inspected. The movable joint may also permit linear (axial) displacement of the elongate tubular member relative to the probe body. This may help absorb any so-called over-travel and thus provide an over-deflection protection mechanism that prevents damage to the ultrasound probe when it is moved into contact with a surface by a machine tool.

A deflection sensor may also be provided to sense deflection of the elongate member relative to the probe body. The deflection sensor may be provided to sense motion at the movable joint. The deflection sensor may be optical, capacitive or electrical. The deflection sensor thus allows detection of deflection of the elongate tubular member relative to the probe body, thereby allowing a signal to be output by the probe that indicates contact with an object has been made. Such a signal may be used to stop motion of the ultrasound probe relative to the object.

The ultrasound inspection probe is configured to be used with a machine tool. A machine tool, such as machining centre, milling machine, lathe etc typically has coolant fluid and cutting debris ejected at high speed. A machine tool is thus different to a coordinate measuring machine or inspection robot that is dedicated to measurement and is typically used in a clean environment, such as a temperature-controlled inspection laboratory. The ultrasound probe thus has resistance to the contaminants present in the machine tool environment. Preferably, ultrasound probe is substantially sealed against the ingress of coolant or cutting debris. Advantageously, the ultrasound inspection probe comprises an internal battery. This removes the need for a trailing wire and allows the ultrasound probe to be stored in a tool change carousel adjacent the machine tool enclosure and automatically exchanged with cutting tools etc when it is to be used. Conveniently, the ultrasound probe (e.g., the probe body) includes a wireless communications portion for wireless communication of acquired ultrasound measurement to a remote probe interface. The wireless communications portion may transmit and/or receive measurements over an optical link. The wireless communications portion may transmit and/or receive measurements over a radio frequency (RF) link (e.g., a spread-spectrum link, such as a frequency hopping spread spectrum link). An apparatus may be provided that includes the ultrasound probe and such a probe interface. The ultrasound probe may be attachable, or attached, to a tool shank.

According to a second aspect of the present invention, there is provided an ultrasound inspection probe for a machine tool, comprising:
a probe body,
an elongate member extending from the probe body, the elongate member comprising a datum surface for contacting an object to be inspected,
an ultrasound transducer, and
an ultrasound coupling element having a transducer-contacting face coupled to the ultrasound transducer and an object-contacting face for acoustically coupling to the object to be inspected, the ultrasound coupling element comprising an elastically deformable material,
wherein the ultrasound inspection probe comprises a bearing mechanism for movably attaching the ultrasound transducer to the elongate member, the bearing mechanism being configured to guide the ultrasound transducer back and forth along a linear axis of the elongate member such that the ultrasound transducer maintains a substantially invariant orientation relative to the surface normal of the datum surface.

The ultrasound inspection probe according to the second aspect of the present invention thus includes a bearing mechanism that is configured to provide linear motion (i.e., motion along the linear axis) of the ultrasound transducer relative to the elongate member. In this manner, the ultrasound transducer maintains a substantially invariant orientation relative to the surface normal of the datum surface when it translates back and forth. Such linear motion of the ultrasound transducer may be used to accommodate translation of the ultrasound coupling element within the elongate member and/or expansion or contraction of the ultrasound coupling element (e.g., which arise when the datum surface is brought into contact with an object to be inspected). This linear translation of the ultrasound transducer has been found to be advantageous because it allows a predefined force to be applied to the ultrasound coupling element via the ultrasound transducer during measurement. In other words, the compression force applied to the ultrasound coupling element during measurement may be invariant even if the ultrasound coupling element expands (e.g., due to swelling as a result of exposure to coolant) and/or moves relative to the datum surface. Applying a substantially invariant compressive force to the elastically deformable material of the ultrasound coupling element also helps to ensure consistency between ultrasound measurements.

The ultrasound coupling element may be directly attached to the elongate member. For example, the ultrasound coupling element may be formed as a plug or block of material that is at least partially affixed within the distal end of the elongate member. The object-contacting face of the ultrasound coupling element may extend beyond the datum surface of the elongate member and the ultrasound coupling element may deform when pressed into contact with an object (i.e., until the datum surface contacts the object to be inspected).

Alternatively, the ultrasound coupling element may be provided as part of an ultrasound coupling assembly. Such an ultrasound coupling assembly may comprise a carrier shell containing an ultrasound coupling element. In such an arrangement, a bearing mechanism may also be provided that allows the ultrasound coupling assembly to move relative to the elongate member. In particular, the ultrasound coupling assembly may be movable between an extended position in which the object-contacting face of the ultrasound coupling element extends beyond the datum surface of the elongate member and a measurement position in which the object-contacting face of the ultrasound coupling element is substantially flush with the datum surface of the elongate member.

The ultrasound inspection probe according to the second aspect of the invention may also include any one or more of the features described in connection with the first aspect of the present invention.

Also described herein is an ultrasound inspection stylus for mounting to a probe body, the stylus comprising an elongate member having a proximal end for attachment to a probe body, the elongate member comprising a datum surface for contacting an object to be inspected, an ultrasound transducer, an ultrasound coupling assembly for acoustically coupling the ultrasound transducer to the object to be inspected, the ultrasound coupling assembly comprising a carrier shell containing an ultrasound coupling element, the ultrasound coupling element comprising a transducer-contacting face coupled to the ultrasound transducer and an object-contacting face for acoustically coupling to the object to be inspected, and a bearing mechanism for movably attaching the ultrasound transducer and the ultrasound coupling assembly to the elongate member, the bearing mechanism allowing the ultrasound transducer and the ultrasound coupling assembly to move between an extended position in which the object-contacting face of the ultrasound coupling element extends beyond the datum surface of the elongate member and a measurement position in which the object-contacting face of the ultrasound coupling element is substantially flush with the datum surface of the elongate member, wherein the bearing mechanism is configured to guide the ultrasound transducer along a linear axis of the elongate member such that the ultrasound transducer maintains a substantially invariant orientation relative to the normal of the datum surface. The stylus may be attached, or attachable, to a probe body. The stylus may have any of the features described above.

An ultrasound inspection probe is described herein. The ultrasound inspection probe may be suitable for a machine tool. The ultrasound inspection probe may comprise a probe body. The ultrasound inspection probe may comprise an elongate member. The elongate member may extend from the probe body. The elongate member may comprise a datum surface. The datum surface may be for contacting an object to be inspected. The probe may comprise an ultrasound transducer. The probe may comprise an ultrasound coupling assembly. The ultrasound coupling assembly may be for acoustically coupling the ultrasound transducer to the object to be inspected. The ultrasound coupling assembly may comprise a carrier shell. The carrier shell may contain an ultrasound coupling element. The ultrasound coupling element may comprise a transducer-contacting face. The transducer-contacting face may be coupled to the ultrasound transducer. The ultrasound coupling element may comprise an object-contacting face. The object-contacting face may be for acoustically coupling to the object to be inspected. The probe may comprise a bearing mechanism. The bearing mechanism may movably attach the ultrasound transducer and/or the ultrasound coupling assembly to the elongate member. The bearing mechanism may allow the ultrasound transducer and/or the ultrasound coupling assembly to move to an extended position. In the extended position, the object-contacting face of the ultrasound coupling element may extend beyond the datum surface of the elongate member. The bearing mechanism may allow the ultrasound transducer and/or the ultrasound coupling assembly to move to a measurement position. In the measurement position, the object-contacting face of the ultrasound coupling element may be substantially flush with the datum surface of the elongate member. The bearing mechanism may be configured to guide the ultrasound transducer along a linear axis of the elongate member. This guidance provided by the bearing mechanism may be such that the ultrasound transducer maintains a substantially invariant orientation relative to the normal of the datum surface. The probe may have any of the features described above.

The present invention will now be described, by way of example only, with reference to the accompanying drawings in which:
Figure 1 shows an ultrasound probe mounted to a spindle within a CNC machine tool,
Figure 2 shows the ultrasound coupling assembly and transducer arrangement of the probe of figure 1,
Figure 3 illustrates the ultrasound coupling assembly and transducer of figure 2 mounted within an elongate tube prior to contact with an object,
Figure 4 illustrates the ultrasound coupling assembly and transducer of figure 2 mounted within an elongate tube and in contact with an object,
Figure 5 illustrates the movable attachment of the elongate tubular member to the probe body,
Figure 6 shows the epoxy bearing used to mount the ultrasound transducer to the elongate tube, and
Figures 7a and 7b are more detailed illustrations of an ultrasound probe of the present invention.

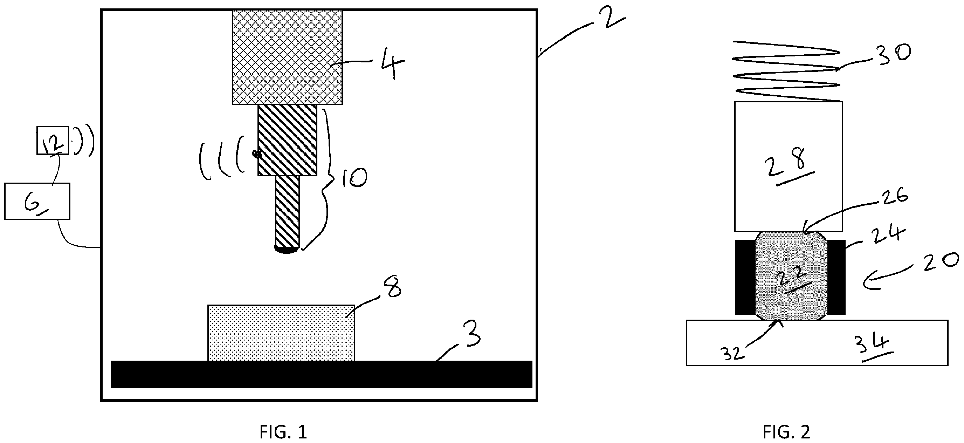

Referring to figure 1, a machine tool is illustrated. The machine tool includes an enclosure 2 that includes a spindle 4 that is movable relative to a bed 3. The spindle 4 can be moved relative to the bed 3 under the control of a computer numerical controller (CNC) 6. In order to cut or process an object 8 placed on the machine tool bed 3, the spindle can carry a cutting tool (not shown). A measurement sensor can also be mounted to the spindle 4 in place of a cutting tool to allow the object 8 to be measured before or after a cutting procedure. Typically, such measurement sensors and tools can be automatically loaded into the spindle 4 under the control of the CNC 6 to allow a desired sequence of cutting and measurement to be implemented. In figure 1, an ultrasound measurement probe 10 is shown mounted to the spindle 4. Measurement information is transmitted wirelessly (e.g., via an optical or radio link) to a probe interface 12 that forwards such measurements to the controller 6. As will be explained below, the ultrasound measurement probe 10 allows internal properties of the object 8 to be measured, such as the thickness of the object.

Referring to figure 2, components of the ultrasound sensing arrangement of the measurement probe 10 are schematically illustrated. An ultrasound coupling assembly 20 comprises an elastic ultrasound coupling element 22 partially contained within an outer, tubular carrier shell 24. The tubular carrier shell 24 is made from a substantially rigid material that prevents the elastic coupling element 22 from expanding radially (i.e., the elastic coupling element 22 is radially constrained by the tubular carrier shell 24) but allows longitudinal expansion.

A proximal (rear) face 26 of the elastic coupling element 22 protrudes from the proximal end of the tubular carrier shell 24. An ultrasound transducer 28 is biased (pressed) into contact with the proximal (rear) face 26 of the elastic coupling element 22 by a compression spring 30. A distal (front) face 32 of the elastic coupling element 22 protrudes from the distal end of the tubular carrier shell 24. This distal (front) face 32 of the elastic coupling element 22 is configured to be pressed into contact with the object 34 to be measured.

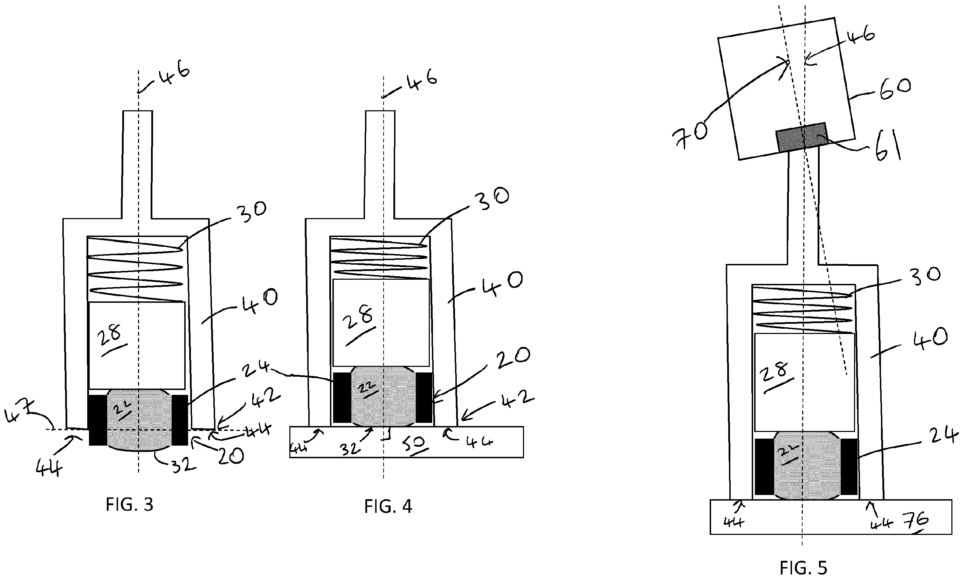

Referring to figure 3, the ultrasound coupling assembly 20, transducer 28 and compression spring 30 are schematically illustrated when movably mounted within an elongate tubular member 40. The proximal end of the elongate tubular member 40 is mounted to a probe housing (not shown) and the distal end 42 of the elongate tubular member 40 provides an annular datum (reference) surface 44. The transducer 28 and the ultrasound coupling assembly 20 are configured to move linearly (i.e., translate back and forth) within the elongate tubular member 40. As explained in more detail below, the formation of an adhesive-based linear bearing surface may provide control over such linear motion.

The ultrasound coupling assembly 20 and particularly the transducer 28 are aligned during manufacture so that the acoustic axis 46 (i.e., the axis along which ultrasound is directed) is substantially perpendicular to the plane 47 containing the annular datum surface 44. In other words, the acoustic axis 46 is aligned to be substantially parallel to the normal to the datum surface 44. This alignment may, for example, comprise adjusting the orientation of the transducer 28 relative to the elongate tubular member 40 in which it is carried. The acoustic axis 46 is also aligned with the linear axis of translation of the ultrasound coupling assembly 20 within the elongate tubular member 40. This ensures that when the annular datum surface 44 engages the surface of an object the ultrasound will be directed into the object along the direction perpendicular to the surface. It should be noted that adjustments of the orientation of the acoustic axis 46 relative to the normal of the datum surface 44 may be possible after manufacture. For example, this could allow adjustments of the acoustic axis 46 during a repair or recalibration procedure.

Figure 3 shows the ultrasound coupling assembly 20 biased into its (fully) extended position by the compression spring 30 (noting that the mechanical stops that would define this fully extended position are not shown). In this configuration, the distal (front) face 32 of the elastic coupling element 22 extends beyond the annular datum (reference) surface 44. This configuration is adopted when the ultrasound measurement probe 10 has not been placed into engagement with an object to be inspected (e.g., when it is in free space prior to measurement).

Referring to figure 4, the measurement probe illustrated in figure 3 is shown when pressed into engagement with an object 50 to be measured. In this configuration, the annular datum surface 44 of the elongate tubular member 40 is brought into contact with the object 50. The action of bringing the annular ultrasound coupling assembly 20 into contact with the surface of the object 50 pushes the ultrasound coupling assembly 20 and transducer 28 backwards into the elongate tubular member 40 until the distal (front) face 32 of the elastic coupling element 22 is flush with the annular datum surface 44. In other words, the ultrasound coupling assembly 20 adopts a retracted (measurement) position in which the acoustic axis 46 is substantially perpendicular to the surface of the object 50. Ultrasound is thus coupled into the object 50 in a direction orthogonal to the surface normal.

The force with which the distal (front) face 32 of the elastic coupling element 22 is pushed into the surface is governed by the strength of the bias provided by the compression spring 30. Furthermore, because the ultrasound transducer 28 is also pushed into contact with the proximal (rear) face 26 of the elastic coupling element 22 by the compression spring 30 the compressive force to which the elastic coupling element 22 is subjected is also controlled by the compression spring 30. This arrangement means that any expansion of the elastic coupling element 22, which must be linear (non-radial) expansion because of the tubular carrier shell 24, does not have a substantial effect on the compression force applied to the elastic coupling element 22 during measurement (i.e., when in the retracted/measurement position). This increases the repeatability between measurements, even if the elastic coupling element 22 swells significantly due to the absorption of coolant or the like.

Referring to figure 5, it is schematically illustrated how the elongate tubular member 40 is movably mounted to a part of the probe body, namely the illustrated housing portion 60. The housing portion 60 includes a movable joint 61 that allows the elongate tubular member 40 to move relative to the housing portion 60. This arrangement allows the elongate tubular member 40 to tilt and also move (translate) towards the housing portion 60 (i.e., so the proximal end of the elongate tubular member 40 can retract into and move back out from the housing portion 60). A bias is also provided for urging the elongate tubular member 40 into a rest position in which an elongate axis 70 of the housing portion 60 coincides with the acoustic axis 46 (which in this example coincides with the longitudinal axis of the elongate tubular member 40). It should be noted that the deflected position, not the rest position, is shown in figure 5.

In use, the distal end of the elongate tubular member 40 is moved into contact with the object 76 to be measured. The movable joint 61 provided between the housing portion 60 allows the elongate tubular member 40 to move so that the annular datum surface 44 sits flat on the object's surface. This motion, which is greatly exaggerated in figure 5, ensures the annular datum surface 44 and hence the acoustic axis 46 of the ultrasound probe are aligned to the normal to the object's surface. In this particular example, this ensures the acoustic axis 46 of the ultrasound probe is perpendicular to the surface of the object 76 during measurement. The translational motion of the movable joint 61 also acts as an "overtravel" mechanism that takes up any excess movement of the probe towards the object. Importantly, the motion provided by the movable joint 61 does not affect the force with which the elastic coupling element 22 is pressed into engagement with the surface of the object.

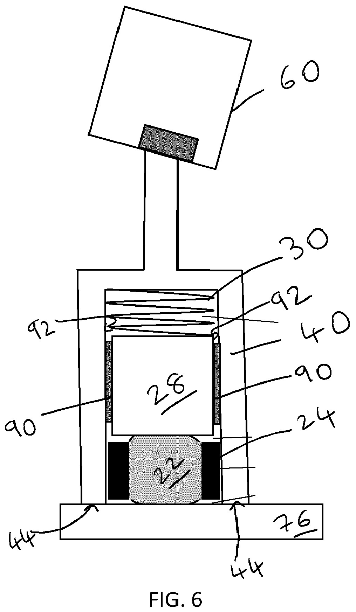

Referring to figure 6, it will be described how a sliding bearing can be implemented for guiding the ultrasound transducer 28 relative to the elongate tubular member 40. Components of the ultrasound probe that correspond to analogous components described with reference to 5 are assigned like reference numerals.

The ultrasound transducer 28 is partially encapsulated in a layer of hardened epoxy 90 that provides a bearing surface which slideably engages the inner surface 92 of the elongate tubular member 40. A sliding bearing is thus provided which guides the ultrasound transducer 28 back and forth along a linear axis. This sliding bearing arrangement ensures that the ultrasound transducer 28 maintains a fixed orientation relative to the normal to the annular datum surface 44 even when translated back and forth. In other words, a bearing mechanism is provided for constraining motion of the transducer element to maintain a fixed transducer orientation relative to the normal to the annular datum surface 44. In particular, at least pitch and yaw of the ultrasound transducer 28 are substantially prevented.

The process for forming the sliding bearing that is illustrated in figure 6 includes the following steps. Firstly, the (inner) bearing surface 92 of the elongate tubular member 40 is coated with a wax release agent. The ultrasound transducer 28 is then held in the required location and orientation within the elongate tubular member 40. A two-part epoxy is injected into the space between the transducer 28 and the inner bearing surface of the elongate tubular member 40 and the epoxy is and allowed to set. The transducer 28 and set epoxy are slid out of the elongate tubular member 40 and the wax is cleared off the (inner) bearing surface 92 of the elongate tubular member 40. The transducer 28 and attached (i.e., set or hardened) epoxy 90 are returned to the elongate tubular member 40 with appropriate lubrication, forming a high precision sliding (linear) bearing.

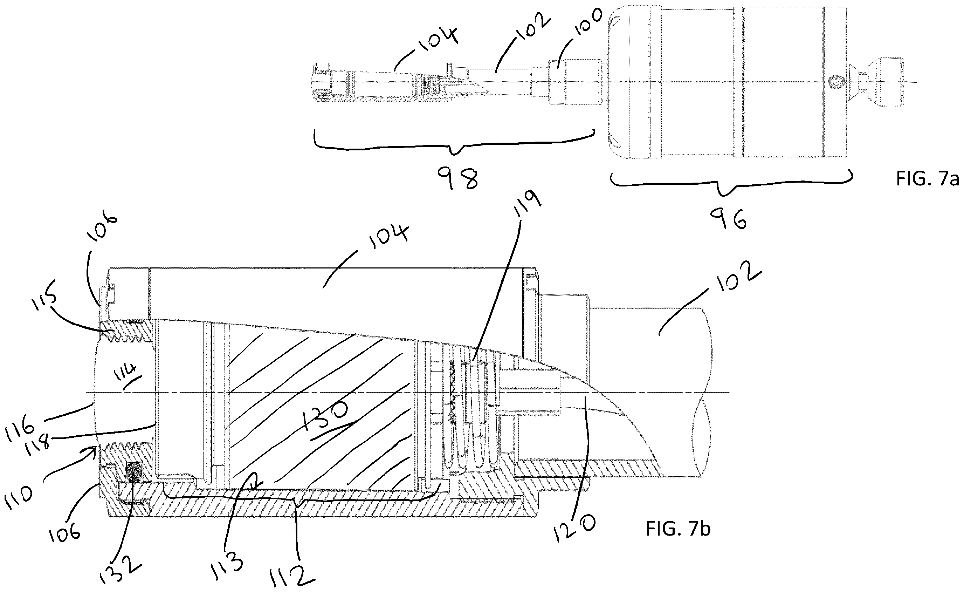

Referring next to figures 7a and 7b, an ultrasound inspection probe is shown that includes a probe body 96 and an ultrasound stylus 98. Figure 7b provides an expanded view of the distal end of the inspection probe of figure 7a.

The ultrasound stylus 98 comprises an elongate tubular structure that is formed from a first section 100, a second section 102 and a third section 104. The first section 100 comprises the proximal end of the stylus and includes a screw-threaded recess configured to attach the stylus 98 to a corresponding screw-threaded protrusion of the probe body 96. The second section 102 comprises a hollow tube that connects the first section 100 to the third section 104. The three sections 100, 102 and 104 are releasably connected to each other to allow easy disassembly, but they could alternatively be permanently bonded to each other. It would also be possible for the stylus to be formed as an integral (e.g., single piece) tubular structure. In other words, a modular or integral stylus may be provided.

An annular datum surface 106 provides the distal face of the third section 104 of the stylus. An ultrasound coupling assembly 110 and an ultrasound transducer 112 are slidably mounted within the third section 104 of the stylus 98. The sliding (linear) bearing of the ultrasound transducer 112 is provided by an epoxy layer 130 that slides against a corresponding inner surface 113 of the third section 104 of the stylus. The ultrasound coupling assembly 110 comprises an external O-ring 132 that slides against a corresponding inner surface of the third section 104 of the stylus. As described above, the ultrasound coupling assembly 110 comprises an ultrasound coupling element 114 that in this example comprises high-consistency rubber. The ultrasound coupling element 114 is radially constrained within a carrier shell 115 and has a dome-shaped object-contacting (front) face 116 that (in the absence of an external force) protrudes (extends) through the aperture defined by the annular datum surface 106. The ultrasound transducer 112 is biased into contact with a transducer-contacting (rear) face 118 of the ultrasound coupling element 114 by a spring 119. In use, the annular datum surface 106 engages the surface of the object and the object-contacting (front) face 116 of the ultrasound coupling assembly 110 will retract such that it lies flush with the annular datum surface 106. As explained above, the spring 119 controls the force applied to the ultrasound coupling element 114. A wire 120 passes through the stylus 98 from the ultrasound transducer 112 and to the probe body.

The stylus 98 is releasably attached to the probe body 96 via the screw thread connection provided by the screw-threaded recess and the corresponding screw-threaded protrusion. A deflectable stylus carrier of the probe body 96 is attached to the rest of the probe body by a movable joint that provides a deflection mechanism. Deflection of the stylus carrier relative to the casing of the probe body 96 is measured by an appropriate sensor. In this manner, deflection of the stylus 98 due to contact with the surface of an object can be sensed and may be used by the machine tool to stop motion of the ultrasound probe. Any over-travel of the ultrasound probe can also be absorbed by the deflection mechanism preventing damage to the stylus 98. The probe body 96 of this example also includes a processing unit, including a processor, for analysing the ultrasound signal and a wireless communications unit for transmitting ultrasound measurements to an associated probe interface. In this example, these are provided on one or more circuit boards located within the probe body 96.

It should be remembered that the above are only examples of the present invention. This skilled person would appreciate the various different ways in which the present invention could be implemented.

## Claims

1. An ultrasound inspection probe for a machine tool, comprising:
a probe body,
an elongate member extending from the probe body, the elongate member comprising a datum surface for contacting an object to be inspected,
an ultrasound transducer,
an ultrasound coupling assembly for acoustically coupling the ultrasound transducer to the object to be inspected, the ultrasound coupling assembly comprising a carrier shell containing an ultrasound coupling element, the ultrasound coupling element comprising a transducer-contacting face coupled to the ultrasound transducer and an object-contacting face for acoustically coupling to the object to be inspected, and
a bearing mechanism for movably attaching the ultrasound transducer and the ultrasound coupling assembly to the elongate member, the bearing mechanism allowing the ultrasound transducer and the ultrasound coupling assembly to move between an extended position in which the object-contacting face of the ultrasound coupling element extends beyond the datum surface of the elongate member and a measurement position in which the object-contacting face of the ultrasound coupling element is substantially flush with the datum surface of the elongate member,
wherein the bearing mechanism is configured to guide the ultrasound transducer along a linear axis of the elongate member such that the ultrasound transducer maintains a substantially invariant orientation relative to the surface normal of the datum surface.

2. An ultrasound inspection probe according to claim 1, wherein the linear axis is substantially parallel to the surface normal of the datum surface.

3. An ultrasound inspection probe according to any preceding claim, wherein the ultrasound transducer emits ultrasound along at least a first acoustic axis, the first acoustic axis being configured to be substantially parallel to the linear axis.

4. An ultrasound inspection probe according to any preceding claim, comprising a biassing mechanism for urging the ultrasound coupling assembly towards the extended position.

5. An ultrasound inspection probe according to claim 4, wherein the biasing mechanism applies the bias to the ultrasound coupling assembly via the ultrasound transducer.

6. An ultrasound inspection probe according to any preceding claim, wherein the bearing mechanism comprises a first bearing portion for guiding motion of the ultrasound transducer relative to the elongate member, the first bearing portion being provided by a moulded outer surface of the ultrasound transducer that is in sliding contact with a surface of the elongate member.

7. An ultrasound inspection probe according to claim 6, wherein the bearing mechanism comprises a second bearing portion for guiding motion of the ultrasound coupling assembly relative to the elongate member.

8. An ultrasound inspection probe according to any preceding claim, wherein the elongate member comprises an elongate tubular member, the ultrasound transducer and the ultrasound coupling assembly being movably mounted within the elongate tubular member.

9. An ultrasound inspection probe according to claim 8, wherein the elongate tubular member has a substantially circular cross-section.

10. An ultrasound inspection probe according to any preceding claim, wherein the carrier shell comprises a substantially rigid material that at least partially constrains the ultrasound coupling element.

11. An ultrasound inspection probe according to any preceding claim, wherein the carrier shell is substantially tubular and has a circular cross-section, the ultrasound coupling element being radially constrained by the tubular carrier shell.

12. An ultrasound inspection probe according to any preceding claim, wherein the ultrasound coupling element comprises a dry elastic ultrasound coupling material that can acoustically couple to an object without requiring use of a couplant liquid or gel.

13. An ultrasound inspection probe according to any preceding claim, wherein the elongate member is attached to probe body via a movable joint and the ultrasound inspection probe comprises a deflection sensor to sense deflection of the elongate member relative to the probe body.

14. An ultrasound inspection probe according to any preceding claim, comprising an internal battery and a wireless communications portion for wireless communication of acquired ultrasound measurement to a remote probe interface, wherein the ultrasound probe is substantially sealed against the ingress of coolant or cutting debris.

15. An ultrasound inspection probe for a machine tool, comprising:
a probe body,
an elongate member extending from the probe body, the elongate member comprising a datum surface for contacting an object to be inspected,
an ultrasound transducer, and
an ultrasound coupling element having a transducer-contacting face coupled to the ultrasound transducer and an object-contacting face for acoustically coupling to the object to be inspected, the ultrasound coupling element comprising an elastically deformable material,
wherein the ultrasound inspection probe comprises a bearing mechanism for movably attaching the ultrasound transducer to the elongate member, the bearing mechanism being configured to guide the ultrasound transducer back and forth along a linear axis of the elongate member such that the ultrasound transducer maintains a substantially invariant orientation relative to the surface normal of the datum surface.
